# EUROPEAN PATENT SPECIFICATION

(11) **EP 3 065 574 B1**
(45) Date of publication and mention of the grant of the patent: **01.07.2020**
(21) Application number: 14796869.7
(22) Date of filing: 07.11.2014
(51) Int. Cl.: A23N 17/00, A01K 61/80

(54) **METHODS AND APPARATUS FOR TRANSPORTING AQUACULTURE FEED**
METHODE UND VORRICHTUNG ZUM FUTTERTRANSPORT IN AQUAKULTUR
PROCEDE ET DISPOSITIF POUR LE TRANSPORT D'ALIMENTATION POUR L'AQUACULTURE

(30) Priority: 07.11.2013 GB 201319682
(43) Date of publication of application: 14.09.2016
(73) Proprietor: Seafarm Products AS, 5725 Vaksdal (NO)
(72) Inventor: AGA, Morten, N-5725 Vaksdal (NO)
(74) Representative: Dehns
(86) International application number: PCT/GB2014/053315
(87) International publication number: WO 2015/067955

(56) References cited:
- WO-A1-2009/112820
- WO-A1-2011/064538
- WO-A2-02/28199
- GB-A- 2 147 181
- US-A- 4 400 399

## Description

The present invention relates to apparatus and methods for transporting aquaculture feed, in particular for impregnating aquaculture feed pellets with water during transportation to an aquaculture site.

Farmed fish or shellfish are typically fed with pellets containing the necessary nutrients at an aquaculture site, which may comprise cages located out to sea. In present day intensive aquaculture, the feed is transported from a storage silo on the fish farm to the fish in their pens, typically by blowing the feed pellets with high capacity fans or air compressors. However, when such pneumatic feeding devices are used the feed pellets need to be very robust to avoid pellet degradation. A Nofima report No. 11/2008 published August 2008 and entitled "Feed pellet durability in pneumatic conveying systems for fish farming" found that the process of blowing feed pellets, e.g. from a silo to the fish feeding cages, causes the feed pellets to fracture and typically creates 1 to 7% more dust than other pellet transportation techniques.

In addition to pellet degradation caused by pneumatic conveying, chips and dust will be broken off from feed pellets during all stages of handling from pellet production to administration of the feed on the fish farm. The pellets are formed from a mixture of dry ingredients such as fish meal, soya protein, wheat, etc. that is first pre-heated and then extruded into pellets. After extrusion there is always some disintegration of the pellets and this dust is collected after the feed has been dried, by running the feed pellets over a screen. After drying the pellets, the feed is coated with oil, cooled and transported to a storage silo. The height of a typical silo results in a significant pressure on the pellets towards the bottom of the silo and this will cause some disintegration. After storage in the silo, the pellets will again be run over a screen before being transferred into smaller containers that can be lifted on board a ship for transportation to an aquaculture site. When the feed arrives at the fish farm it may be stored in another silo and again the weight of the pellets may cause further disintegration. Some fish farmers will measure out the feed pellets on site using a screen system to separate out the dust and may complain to the feed producer if more than 1 to 1.5% of the feed weight has been lost. For all of these reasons there is a strong incentive for feed producers to make aquaculture feed pellets that are very hard and robust so as to be able to withstand the various stresses to which they are exposed.

Low feed utilisation by fish due to hard pellets is a contributing factor to high aquaculture costs and organic waste discharge from fish farms. A PhD thesis 2013:07 authored by Maike Marlene Oehme has found that feed utilisation can be improved by optimising physical pellet quality and feeding equipment in salmonid farming. Here it was reported that increasing air speed during pneumatic conveying increases the formation of fractures (particle size 2.4 to 10 mm) and fines (particle size less than 2.4 mm) from fish feed pellets. Pneumatic transportation of feed pellets at high air speed therefore causes pellet degradation and loss of feed.

A problem with hard feed pellets is that they are not very well suited for fish digestion. Feed pellets can not be digested in their dry condition and need to be soaked with water before digestion can start. Where feed pellets are hard, the fish will generally have to consume ambient water to ensure that the pellets soften and disintegrate sufficiently after ingestion. However the necessary soaking period can be relatively long depending on how compact the pellet is and, among other factors, the ambient temperature. It has been observed that often feed pellets pass through the fish without being completely digested. It is therefore desirable for feed pellets to be softened prior to administration.

It has previously been proposed in WO 2011/064538 to soften aquaculture feed pellets before feeding them to fish by impregnating the pellets with water. This may be achieved by introducing the hard feed pellets into a water-circulating loop and exposing the pellets therein to pressure changes. The water-impregnated feed pellets may then be lifted out of the circulating water flow for subsequent administration to the fish. However it has been found that this technique may have some drawbacks. Firstly, the softened pellets may need to be removed from the circulating flow and administrated immediately as they can not be stored or transported in their softened state. This may require a water-impregnation loop to be operated next to the feeding cages. Secondly, when the hard feed pellets are conveyed to the feeding site and introduced into the circulating loop, for example using a pneumatic blower, the pellets may be damaged so that fractures and fines are carried in the circulating water in the loop. It has been found that a lot of dust from the feed pellets is washed off during circulation and remains circulating in the loop conduit after the pellets have been removed. This can lead to a build-up of feed particles in the loop conduit that will tend to collect and provide a breeding ground for bacterial growth. Particularly during periods of warmer weather, bacteria can grow rapidly in the circulating water and then become incorporated into softened pellets which are subsequently fed to fish. Of course it is dangerous for the farmed fish to eat feed that has been contaminated with bacteria.

There remains a need for an efficient way of transporting fish feed pellets to an aquaculture site without causing feed loss and while optimising feed utilisation by the fish.

GB2147181 describes a fish feed distribution system in which feed pellets are created by a pellet press directly into the centre of a circulating water chamber from which they are extracted and distributed to fish ponds.

According to a first aspect of the present invention there is provided an apparatus for impregnating aquaculture feed pellets with water, the apparatus comprising a direct conduit containing a flow of water arranged to transport aquaculture feed pellets to a feeding site without any circulation, wherein the direct conduit includes a reduced pressure zone thereby causing the aquaculture feed pellets to become impregnated with water.

It will be appreciated that using a flow of water to transport aquaculture feed pellets to a feeding site can be much gentler to the feed than pneumatic conveying techniques. Accordingly the feed pellets do not need to be as hard when transported by a flow of water as compared to being transported by compressed air. Of course it is still undesirable for the feed pellets to start disintegrating before they reach the feeding site, as any dust particles will be released from the feed into the water, and from there back into the sea. Accordingly the feed pellets may still be produced so as to be relatively hard, and too hard for the fish to digest in an optimal way, so that there is little feed loss into the environment. The hard pellets are instead softened by water impregnation as they pass through the reduced pressure zone of the direct conduit, so that they become digestible for the fish by the time they reach the feeding site. In the reduced pressure zone the feed pellets are exposed to an underpressure, for example a region of sub-atmospheric pressure, that acts to remove air from the pellets so that there is an uptake of water. The direct conduit may contain fresh water or sea water e.g. depending on whether the feeding site is located in fresh water or seawater. Feed pellets that are impregnated with seawater may be particularly suitable for salmon farming.

As there is a plentiful supply of water, especially seawater, at a feeding site, there is no need for the water flowing through the conduit to be recirculated. As the conduit directs the flow of water to the feeding site without any circulation, there is no problem of fines building up in the conduit so bacterial growth is prevented. Furthermore, an advantage of using a direct conduit to both transport the feed pellets and cause water impregnation is a lower energy demand, whereas a loop conduit as disclosed in WO 2011/064538 requires a pump to provide water circulation and additional means such as a blower to distribute the water-impregnated feed pellets after they have been removed from the loop conduit.

In a set of embodiments the direct conduit contains a flow of seawater. Using seawater to transport the feed pellets directly to a feeding site at the same time as softening the pellets means that access to fresh water is not required at a sea-cased aquaculture facility. This may be particularly beneficial for fish farms located out at sea, for example salmon farms.

The purpose of the reduced pressure zone is to cause air bubbles to leave the feed pellets so that they become impregnated with water. The direct conduit may include a single reduced pressure zone, or the reduced pressure zone may be provided as part of multiple pressure variations along the direct conduit. In one set of embodiments the direct conduit includes one or more pressure variations. This may be achieved, for example, by one or more changes of height in the direct conduit. In one example, the feed pellets carried by the flow of water may be repeatedly exposed to variations in height and reduced pressure zones by providing a helical conduit having a substantially horizontal axis for the helix. Alternatively, or in addition, one or more pressure variations may be achieved within the direct conduit by providing flow constriction(s) that cause the pellet to experience increased pressure followed by a reduced pressure zone. It is not necessary for the direct conduit to vary in height. For example, the direct conduit may be substantially horizontal with the reduced pressure zone created by a gas removal i.e. suction pump. In such embodiments the direct conduit may extend at or below sea level with suction being applied in the reduced pressure zone to cause water impregnation of the pellets as they pass therethrough.

The applicant has recognised that applying suction to create one or more reduced pressure zones along the direct conduit may not be energy-efficient. A reduced pressure zone may conveniently be provided by a siphon arrangement. In a siphon, the water level is increased and a reduced pressure zone is formed as the water flows back down to a lower level. Thus in a preferred set of embodiments the direct conduit includes a siphon arranged to provide the reduced pressure zone. By using a siphon arrangement, a gas removal i.e. suction pump is not required to create a reduced pressure zone, although such a pump may be used to initiate siphonic flow. Where a suction pump is not provided, or not run continuously, the direct conduit may be vented to aid the removal of gases extracted from the feed pellets as they pass through the reduced pressure zone. Where the direct conduit includes a siphon, the reduced pressure zone may take the form of a headspace arranged in an elevated portion of the direct conduit. The direct conduit downstream of the headspace may be at a lower level than the direct conduit upstream of the headspace, so as to create a siphonic flow passing therethrough. In a set of embodiments, the siphon is provided by an inverted U-bend in the direct conduit.

It will be appreciated that the direct conduit including a siphon may be positioned at, above and/or below sea level. In at least some embodiments it is preferable that the direct conduit upstream of the siphon is arranged at or above sea level. This may facilitate introduction of feed pellets into the direct conduit substantially at atmospheric pressure. In at least some embodiments it is preferable that the direct conduit downstream of the siphon is arranged at or below sea level. This may make it easier to arrange a height change in the conduit to create a siphon, while also arranging for the water-impregnated pellets to be delivered at the same height as a feeding site such as a submerged fish cage. In embodiments where the direct conduit comprises an inverted U-bend, the siphon may be created by increasing the height of the direct conduit above sea level. For example, increasing the height of the direct conduit by eight metres above sea level creates a pressure reduction of 80% relative to a vacuum level of 0.1 bar. A siphonic flow of water through the direct conduit therefore provides a particularly convenient way of providing a pressure reduction to cause water uptake in feed pellets.

The apparatus preferably comprises a feed port for introducing aquaculture feed pellets into the direct conduit. The feed port may be located at or above sea level. Further preferably the feed port may be selectively opened and/or closed. In a set of embodiments the feed port is arranged to be opened only when water is flowing through the direct conduit. The feed port may be closed at other times when water is not flowing through the direct conduit or the flow is not uniform, for example when the flow is being initialised and/or when a blockage has caused the flow to be halted. This can prevent unnecessary feed loss and ensure a constant feed delivery rate.

The flow of water through the direct conduit may be established and/or maintained by any suitable means. Preferably the flow is substantially continuous. While a gravity flow may be provided, this is unlikely to occur naturally for seawater. In a preferred set of embodiments the apparatus comprises a pump for establishing a flow of water e.g. seawater through the direct conduit. Water may be pumped into the direct conduit either upstream or downstream of the feed introduction port. In embodiments where the flow through the direct conduit is not siphonic, the pump may run continuously to maintain a flow of water through the direct conduit. Of course quasi-continuous operation of the pump may also be possible, for example small bursts that create a near-continuous flow.

In embodiments where the direct conduit includes a siphon arrangement, the pump may be operated at least to establish a siphonic flow of water to the direct conduit. Once water has been pumped through the conduit to the siphon, the suction effect of the headspace will maintain a flow and the pump may then be reduced in speed or turned off. The pump may therefore act as a starter pump for siphonic flow and, once the siphonic flow has been established, the apparatus can run with relatively low energy demands. In other examples, the siphon may comprise a headspace including a gas removal i.e. suction pump that is used as a starter pump to establish siphonic flow, in addition to or instead of another pump as described above.

According to a second aspect of the present invention there is provided a method of impregnating aquaculture feed pellets with water, the method comprising: transporting aquaculture feed pellets to a feeding site using a flow of water through a direct conduit without any circulation; and arranging for the flow of water to pass through a reduced pressure zone in the direct conduit thereby causing the aquaculture feed pellets to become impregnated with water.

As is described above, such a method advantageously combines hydraulic conveying of feed pellets with water impregnation so that the pellets are less prone to disintegration and become softened by the time they are delivered to the feeding site. The method may use fresh water or sea water e.g. depending on whether the feeding site is located in fresh water or seawater.

The method preferably comprises exposing the flow of water to one or more pressure variations. The reduced pressure zone and any other pressure variations may be achieved by applying suction in the direct conduit, for example using a gas removal pump. However it is preferable to arrange for the flow of water to pass through a reduced pressure provided by a siphon, for example arranging for the flow of water to pass through an inverted U-bend in the direct conduit. Such a siphon arrangement provides a pressure reduction that extracts air bubbles from the feed pellets and causes an uptake of water without necessarily requiring a suction pump. The method may conveniently arrange for the flow of water through the direct conduit upstream of the siphon to be at or above sea level. The method may conveniently arrange for the flow of water through the direct conduit downstream of the siphon to be at or below sea level.

In a set of embodiments the method preferably comprises introducing aquaculture feed pellets into the direct conduit. It is desirable that feed pellets are only introduced into the direct conduit when there is a flow of water, or at least a steady flow. The method may therefore comprise establishing a flow of water through the direct conduit before introducing aquaculture feed pellets into the direct conduit. Establishing a flow of water may comprise continuously or quasi-continuously pumping water through the direct conduit. However, in a preferred set of embodiments the method comprises establishing a siphonic flow of water through the direct conduit. Once a siphonic flow of water has been established, it may no longer be necessary to actively pump water therethrough. However in at least some embodiments the method may comprise maintaining the flow of water through the conduit, e.g. using a pump, albeit at a lower speed.

A preferred embodiment of the present invention will now be described, by way of example only, and with reference to the accompanying drawing.

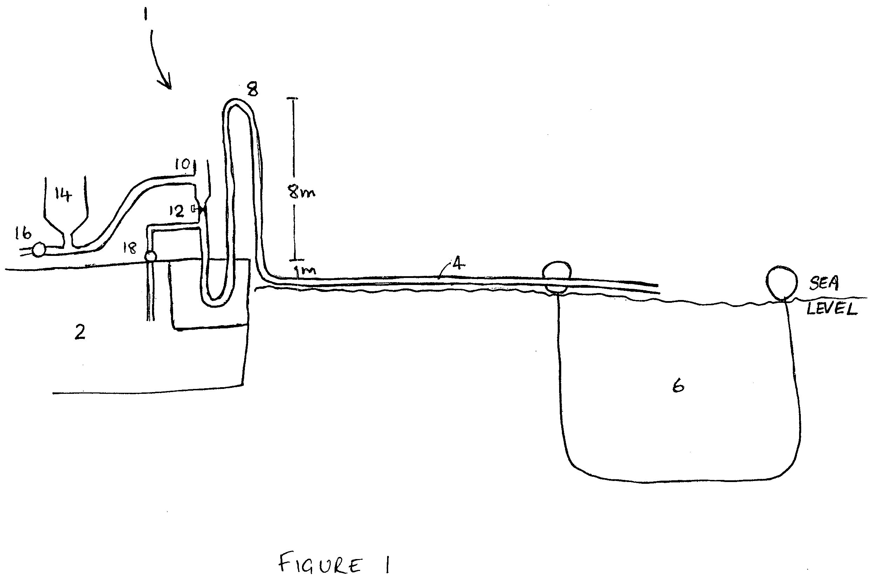

In Figure 1 there is seen an apparatus 1 mounted on a barge 2. The apparatus 1 provides a direct flow conduit 4 for delivering aquaculture feed pellets to a feeding site, shown as a fish cage 6 out at sea. It can be seen that the direct conduit 4 includes an inverted U-bend 8 providing for siphonic flow. Upstream of the siphon 8, feed pellets are introduced by a port 10 connected to the conduit 4 by a feed inlet valve 12. Pellets are stored in a hopper 14 on the barge 2 and may be conveyed to the inlet port 10 by a feed blower 16. Seawater is pumped into the direct conduit 4 using a pump 18.

Operation of the apparatus 1 will now be described.

The pump 18 is operated initially at a high speed to pump seawater through the direct conduit 4 to the fish cage 6 with the feed valve 12 closed. Once the direct conduit is filled with seawater and siphonic flow has been established, the pump 18 may be reduced in speed or even shut off. While seawater is flowing through the conduit 4, the feed valve 12 may be opened so that feed pellets are carried through the conduit 4 to the fish cage 6. At the same time, the feed blower 6 may be operated to transfer feed pellets from the hopper 14 to the inlet port 10. Due to the inverted U-bend 8 in the direct conduit 4, feed pellets are exposed to a reduction of pressure corresponding to the height of the siphon 8. For example, an increase in height of eight metres gives a pressure reduction from 1 bar to approximately 0.2 bar or 80% of vacuum. In the headspace of the siphon 8, air is sucked out of the pellets such that they become impregnated with seawater as they fall down from the top of the siphon 8 and are transported along the conduit 4 to the fish cage 6. The water-impregnated feed pellets are therefore softened by the time they reach the fish cage 6.

Although not seen in Figure 1, downstream of the pump 18 there may be provided a flow restrictor so as to stabilise the water level below the feed inlet port 10. Such a flow restrictor may also be used to increase the speed of flow so that the pellets are more readily carried away. The height of the U-bend 8 can of course be tailored to provide a desired pressure reduction for water impregnation purposes.

It is envisaged that seawater flowing out of the direct conduit may simply be returned to the sea. The softened feed pellets may therefore be transported directly to the feeding site. However, in some embodiments the direct conduit may include an exit provided with a filter to collect any fine particles or fragments that would otherwise be washed out to sea. The softened pellets may be intermittently released into the feeding site once such particulates have been collected. Any disintegrated feed matter that is collected may be returned to a feed production facility and used to make new pellets, for example after having being ground up.

## Claims

1. An apparatus (1) for impregnating aquaculture feed pellets with water, **characterized by**:
a direct conduit (4) containing a flow of water arranged to transport aquaculture feed pellets to a feeding site (6) without any circulation;
wherein the direct conduit (4) includes a reduced pressure zone (8) thereby causing the aquaculture feed pellets to become impregnated with water.

2. An apparatus (1) according to claim 1, wherein the direct conduit (4) includes one or more pressure variations providing the reduced pressure zone (8).

3. An apparatus (1) according to claim 1 or 2, wherein the reduced pressure zone (8) comprises one or more changes of height in the direct conduit (4).

4. An apparatus (1) according to claim 1, 2 or 3, wherein the direct conduit (4) includes a siphon arranged to provide the reduced pressure zone (8).

5. An apparatus (1) according to claim 4, wherein the siphon is provided by an inverted U-bend (8) in the direct conduit (4).

6. An apparatus (1) according to claim 4 or 5, wherein the direct conduit (4) upstream of the siphon is arranged at or above sea level.

7. An apparatus (1) according to claim 4, 5 or 6, wherein the direct conduit (4) downstream of the siphon is arranged at or below sea level.

8. An apparatus (1) according to any preceding claim, comprising a feed port (10) for introducing aquaculture feed pellets into the direct conduit (4), and wherein the reduced pressure zone (8) is preferably downstream of the feed port (10).

9. An apparatus (1) according to any preceding claim, comprising a pump (18) for establishing a flow of water through the direct conduit (4), preferably before aquaculture feed pellets are introduced into the direct conduit (4).

10. An apparatus (1) according to claim 9, wherein the pump (18) is operated to establish a siphonic flow of water through the direct conduit (4).

11. A method of impregnating aquaculture feed pellets with water, **characterized by**:
transporting aquaculture feed pellets to a feeding site using a flow of water though a direct conduit (4) without any circulation; and
arranging for the flow of water to pass through a reduced pressure zone (8) in the direct conduit (4) thereby causing the aquaculture feed pellets to become impregnated with water.

12. A method according to claim 11, comprising:
exposing the flow of water to one or more pressure variations.

13. A method according to claim 11 or 12, comprising:
arranging for the flow of water to pass through a reduced pressure zone (8) provided by a siphon, preferably arranging for the flow of water to pass through an inverted U-bend (8) in the direct conduit (4).

14. A method according to any of claims 11 to 13, comprising:
introducing aquaculture feed pellets into the direct conduit (4); and
establishing a flow of water through the direct conduit (4) before introducing aquaculture feed pellets into the direct conduit (4).

15. A method according to claim 14, comprising:
establishing a siphonic flow of water through the direct conduit (4).

## Patentansprüche

1. Vorrichtung (1) zum Imprägnieren von Aquakulturfutterpellets mit Wasser, **kennzeichnet durch**:
eine Direktleitung (4), für einen Wasserstrom, die angeordnet ist, um Aquakulturfutterpellets ohne jegliche Zirkulation zu einer Futterstelle (6) zu transportieren;
wobei die Direktleitung (4) einen Bereich mit reduziertem Druck (8) aufweist, in dem die Aquakulturfutterpellets mit Wasser imprägniert werden.

2. Vorrichtung (1) nach Anspruch 1, wobei der Druck in dem Bereich der Direktleitung (4) mit reduziertem Druck (8) einen oder mehrere unterschiedliche Werte annehmen kann.

3. Vorrichtung (1) nach Anspruch 1 oder 2, wobei der Bereich mit reduziertem Druck (8) eine oder mehrere unterschiedliche Höhen in der Direktleitung (4) aufweist.

4. Vorrichtung (1) nach Anspruch 1, 2 oder 3, wobei die Direktleitung (4) einen Siphon für den Bereich mit reduziertem Druck (8) umfasst.

5. Vorrichtung (1) nach Anspruch 4, wobei der Siphon in einer umgekehrten U-Biegung (8) in der Direktleitung (4) besteht.

6. Vorrichtung (1) nach Anspruch 4 oder 5, wobei die dem Siphon vorgeschaltete Direktleitung (4) auf oder über Meereshöhe angeordnet ist.

7. Vorrichtung (1) nach Anspruch 4, 5 oder 6, wobei die dem Siphon nachgeschaltete Direktleitung (4) auf oder unter Meereshöhe angeordnet ist.

8. Vorrichtung (1) nach einem der vorstehenden Ansprüche, die eine Zuführöffnung (10) zur Einspeisung von Aquakulturfutterpellets in die Direktleitung (4) umfasst, wobei der Bereich mit reduziertem Druck (8) der Zuführöffnung (10) vorzugsweise nachgeschaltet ist.

9. Vorrichtung (1) nach einem der vorstehenden Ansprüche, die eine Pumpe (18) zur Erzeugung eines Wasserstroms durch die Direktleitung (4) umfasst, vorzugsweise bevor Aquakulturfutterpellets in die Direktleitung (4) eingespeist werden.

10. Vorrichtung (1) nach Anspruch 9, wobei die Pumpe (18) einen Siphonwasserstrom durch die Direktleitung (4) erzeugt.

11. Verfahren zum Imprägnieren von Aquakulturfutterpellets mit Wasser, **gekennzeichnet durch**:
Transport von Aquakulturfutterpellets zu einer Futterstelle unter Verwendung eines Wasserstroms **durch** eine Direktleitung (4) ohne jegliche Zirkulation; und
Anordnung, mit der der Wasserstrom einen Bereich mit reduziertem Druck (8) in der Direktleitung (4) passiert, in dem die Aquakulturfutterpellets mit Wasser imprägniert werden.

12. Verfahren nach Anspruch 11, bei dem
der Druck des Wasserstroms einen oder mehrere unterschiedliche Werte annehmen kann.

13. Verfahren nach Anspruch 11 oder 12, bei dem:
der Wasserstrom einen mit einem Siphon versehenen Bereich mit reduziertem Druck (8) passiert, vorzugsweise so angeordnet, dass der Wasserstrom eine umgekehrte U-Biegung (8) in der Direktleitung (4) passiert.

14. Verfahren nach einem der Ansprüche 11 bis 13, umfassend:
Einleitung von Aquakulturfutterpellets in die Direktleitung (4); und
Erzeugung eines Wasserstroms durch die Direktleitung (4) vor der Einspeisung von Aquakulturfutterpellets in die Direktleitung (4).

15. Verfahren nach Anspruch 14, bei dem
ein Siphonwasserstroms durch die Direktleitung (4) erzeugt wird.

## Revendications

1. Appareil (1) pour l'imprégnation d'aliments granulés d'aquaculture avec de l'eau, **caractérisé par** :
un conduit direct (4) contenant un flux d'eau agencé pour transporter des aliments granulés d'aquaculture vers un site d'alimentation (6) sans aucune circulation ;
dans lequel le conduit direct (4) inclut une zone de pression réduite (8) entraînant ainsi l'imprégnation des aliments granulés d'aquaculture avec de l'eau.

2. Appareil (1) selon la revendication 1, dans lequel le conduit direct (4) inclut une ou plusieurs variations de pression fournissant la zone de pression réduite (8).

3. Appareil (1) selon la revendication 1 ou 2, dans lequel la zone de pression réduite (8) comprend un ou plusieurs changements de hauteur dans le conduit direct (4).

4. Appareil (1) selon la revendication 1, 2 ou 3, dans lequel le conduit direct (4) inclut un siphon agencé pour produire la zone de pression réduite (8).

5. Appareil (1) selon la revendication 4, dans lequel le siphon est fourni par un coude en U inversé (8) dans le conduit direct (4).

6. Appareil (1) selon la revendication 4 ou 5, dans lequel le conduit direct (4) en amont du siphon est agencé au niveau de la mer ou au-dessus.

7. Appareil (1) selon la revendication 4, 5 ou 6, dans lequel le conduit direct (4) en aval du siphon est agencé au niveau de la mer ou au-dessous.

8. Appareil (1) selon l'une quelconque des revendications précédentes, comprenant un port d'alimentation (10) pour l'introduction d'aliments granulés d'aquaculture dans le conduit direct (4), et dans lequel la zone de pression réduite (8) est de préférence en aval du port d'alimentation (10).

9. Appareil (1) selon l'une quelconque des revendications précédentes, comprenant une pompe (18) pour l'établissement d'un flux d'eau à travers le conduit direct (4), de préférence avant que les aliments granulés d'aquaculture soient introduits dans le conduit direct (4).

10. Appareil (1) selon la revendication 9, dans lequel la pompe (18) est actionnée pour établir un flux d'eau siphonique à travers le conduit direct (4).

11. Procédé d'imprégnation d'aliments granulés d'aquaculture avec de l'eau, **caractérisé par** :
un transport des aliments granulés d'aquaculture vers un site d'alimentation en utilisant un flux d'eau à travers un conduit direct (4) sans aucune circulation ; et
un agencement tel que le flux d'eau passe à travers une zone de pression réduite (8) dans le conduit direct (4), entraînant ainsi l'imprégnation des aliments granulés d'aquaculture avec de l'eau.

12. Procédé selon la revendication 11, comprenant :
l'exposition du flux d'eau à une ou plusieurs variations de pression.

13. Procédé selon la revendication 11 ou 12, comprenant :
un agencement tel que le flux d'eau passe à travers une zone de pression réduite (8) fournie par un siphon, de préférence un agencement tel que le flux d'eau passe à travers un coude en U inversé (8) dans le conduit direct (4).

14. Procédé selon l'une quelconque des revendications 11 à 13, comprenant :
l'introduction d'aliments granulés d'aquaculture dans le conduit direct (4) ; et
l'établissement d'un flux d'eau à travers le conduit direct (4) avant l'introduction des aliments granulés d'aquaculture dans le conduit direct (4).

15. Procédé selon la revendication 14, comprenant :
l'établissement d'un flux siphonique d'eau à travers le conduit direct (4).
